# FASCICULE DE BREVET EUROPEEN

(11) **EP 3 619 908 B1**
(45) Date de publication et mention de la délivrance du brevet: **15.02.2023**
(21) Numéro de dépôt: 18723576.7
(22) Date de dépôt: 26.04.2018
(51) Int. Cl.: H04L 67/00, H04L 12/46, H04L 12/28

(54) **TECHNIQUE D'EXÉCUTION D'UN SERVICE DANS UN RÉSEAU LOCAL À TRAVERS UN RÉSEAU DE COMMUNICATION ÉTENDU**
VERFAHREN ZUR DURCHFÜHRUNG EINES DIENSTES IN EINEM LOKALEN NETZWERK ÜBER EIN GROSSFLÄCHIGES KOMMUNIKATIONSNETZ
TECHNIQUE FOR EXECUTING A SERVICE IN A LOCAL AREA NETWORK THROUGH A WIDE AREA COMMUNICATION NETWORK

(30) Priorité: 05.05.2017 FR 1753988
(43) Date de publication de la demande: 11.03.2020
(73) Titulaire: Orange, 92130 Issy-les-Moulineaux (FR)
(72) Inventeur: GIOVANNI, Marc, 92326 Châtillon Cedex (FR); GUIGUES, Pierre, 92326 Châtillon Cedex (FR); HUET, Vincent, 92326 Châtillon Cedex (FR)
(86) Numéro de dépôt international: PCT/FR2018/051057
(87) Numéro de publication internationale: WO 2018/202985

(56) Documents cités:
- WO-A1-2010/041996
- WO-A1-2016/093723
- Tnetwork Working Group: "Layer Two Tunneling Protocol "L2TP"", , 31 August 1999 (1999-08-31), pages 1-80, XP055808627, Retrieved from the Internet: URL:https://www.rfc-editor.org/rfc/pdfrfc/ rfc2661.txt.pdf [retrieved on 2021-05-28]

## Description

L'invention se rapporte au domaine général des télécommunications.

L'invention concerne plus particulièrement une technique d'exécution d'un service dans un réseau local. Plus précisément, une instance du service propre au réseau local exécute à distance le service en tant que dispositif du réseau local.

Dans un réseau local, une passerelle d'accès permet notamment à des dispositifs localisés dans un site client d'accéder à un réseau de communication étendu WAN (pour « Wide Area Network »), tel que le réseau Internet. Le site client correspond par exemple à une entreprise, une habitation. Ces dispositifs correspondent par exemple à un décodeur TV ou « Set-Top-Box », un terminal de voix sur IP (ou VoIP pour « Voice Over IP »), un terminal mobile. Ce réseau local est ainsi relié au réseau de communication étendu par l'intermédiaire de la passerelle d'accès.

Ces passerelles d'accès sont administrées par l'opérateur de réseau de communication. Leur logiciel est mis à jour de manière régulière sous commande de l'opérateur. Pour mettre en oeuvre un nouveau service dans le réseau local, il est nécessaire de mettre à jour le logiciel de la passerelle d'accès. Toutefois, certains services peuvent être requis de manière ponctuelle par exemple pour une opération de maintenance affectant une passerelle d'accès particulière. La méthode d'administration et de conception actuelle des passerelles d'accès ne permet pas d'introduire à la demande un service dans un réseau local.
La publication brevet WO2016/093723 décrit un contrôle de dispositifs d'un réseau local via un tunnel à partir d'un dispositif accédant par l'intermédiaire d'un réseau de communication étendu.

Un des buts de l'invention est de remédier à des insuffisances/inconvénients de l'état de la technique et/ou d'y apporter des améliorations.

L'invention est définie par les revendications indépendantes. Des modes de réalisation particulier sont définies par les revendications dépendantes.

Selon un premier aspect, l'invention a pour objet un procédé de d'exécution d'un service dans un réseau local à travers un réseau de communication étendu, par l'intermédiaire d'une passerelle d'accès permettant à des dispositifs du réseau local d'accéder au réseau étendu, selon la revendication 1.

Par instance d'un service propre au réseau local, on entend par la suite une ressource logicielle destinée à exécuter le service dans le réseau local.

Le procédé s'appuie ainsi sur un tunnel de service configuré entre la passerelle d'accès et un point de terminaison de tunnels dans le réseau de l'opérateur. Ce tunnel de service permet l'interconnexion entre le réseau local et l'infrastructure de l'opérateur et permet le transfert de données entre le réseau local et l'instance de service propre au réseau local au niveau de la couche de liaison de données (correspondant au niveau 2 dans le modèle OSI). Le point de terminaison de tunnels de service permet d'agréger des tunnels de service établis depuis des passerelles d'accès. Il connecte un tunnel de service correspondant à un contexte client avec l'instance du service propre au réseau local, éventuellement à travers un réseau de communication étendu, rendant ainsi possible l'exécution du service dans le réseau local ainsi étendu. L'instance du service propre au réseau local est alors complètement intégrée dans le réseau local et a ainsi accès à la majorité des données véhiculées dans le réseau local, comme si elle était connectée à un commutateur (ou « switch » en anglais) du réseau local. L'instance du service propre au réseau local peut alors interagir avec les dispositifs du réseau local. Ce procédé permet d'ajouter à la demande et en temps réel un service afin d'exécuter celui-ci dans le réseau local comme s'il était exécuté sur un des dispositifs du réseau local. Ceci est rendu possible par l'extension du réseau local jusqu'à l'infrastructure opérateur. Cette instance du service propre au réseau local s'exécute sur un dispositif physique localisé dans le réseau de communication étendu, qui se situe donc à distance du réseau local.

On constate ainsi que cette technique apporte une grande souplesse à l'opérateur pour mettre en place et fournir un service dans le réseau local et également pour l'utilisateur qui peut bénéficier de ce service. Cette technique est compatible avec les passerelles d'accès actuellement déployées dans les réseaux locaux de l'opérateur, dès lors qu'elles sont aptes à établir un tunnel de service. Aucune mise à jour majeure de leur micro-logiciel (« firmware » en anglais ») n'est requise. Seule une mise à jour mineure permettant aux passerelles d'accès de gérer le tunnel de service est requise, le cas échéant. Il s'agit uniquement d'une opération de configuration. En fonction du service, les fonctions d'acheminement ou de routage des données et de translation d'adresse IP peuvent rester mises en oeuvre par la passerelle d'accès. Il ne s'agit pas de revoir l'architecture des passerelles d'accès ou de déporter l'ensemble des fonctions et services de la passerelle d'accès dans l'infrastructure de l'opérateur ; il s'agit de déporter uniquement une partie des fonctions en fonction du service à exécuter. Le fonctionnement de la passerelle d'accès reste en mode dit routé, sans modification de son architecture. Par ailleurs, comme cette instance est propre à un client et à un réseau local, ceci garantit une isolation entre les différents réseaux locaux. Les instances du service propres à un réseau local sont localisées à distance du réseau local depuis des équipements de l'infrastructure de l'opérateur. Il est alors possible d'ajuster les ressources matérielles nécessaires en fonction des demandes, sans impact sur les passerelles d'accès.

Dans un mode de réalisation particulier, cette instance du service propre au réseau local est une instance virtualisée du service créée sur une machine physique dans un système informatique dans l'infrastructure de l'opérateur.

Dans un autre mode de réalisation particulier, cette instance du service propre au réseau local est créée sur une machine physique de l'opérateur de réseau, apte à mettre en oeuvre le service pour différents réseaux locaux.

Le procédé d'exécution d'un service comprend une allocation par la passerelle d'accès d'une adresse dans le réseau local à ladite instance.

Lors de son démarrage, l'instance du service propre au réseau local initie une procédure d'allocation d'adresse, par exemple à l'aide du protocole DHCP (pour « Dynamic Host Configuration Protocol »). Les messages de requête et de réponse sont acheminés de manière transparente au moyen du tunnel de service vers et depuis la passerelle d'accès. Une adresse dans le réseau local est alors allouée à l'instance du service de la même manière qu'à un dispositif du réseau local. Une fois l'adresse allouée à l'instance du service, la passerelle d'accès achemine des données destinées à cette adresse par l'intermédiaire du tunnel de service et reçoit par l'intermédiaire du tunnel de service des données ayant pour adresse source cette adresse allouée, pour les acheminer vers des dispositifs du réseau local ou du réseau de communication étendu.

L'instance du service propre au réseau local est ainsi intégrée dans le réseau local au niveau de la couche réseau, comme un dispositif du réseau local. Elle a ainsi accès à l'ensemble des services présents dans le réseau local et peut également accéder au réseau de communication étendu à travers la passerelle d'accès.

A titre d'exemple illustratif, un utilisateur rencontre des problèmes sur la réception des flux IPTV (pour « Internet Protocol Télévision ») dans son réseau local. Une instance du service correspondant à un décodeur des flux IPTV propre au réseau local peut être configurée et une adresse dans le réseau local lui être allouée. Cette instance du service peut alors fonctionner de la même manière que le décodeur de flux IPTV du réseau local et effectuer des tests qui vont permettre à un conseiller client d'assister l'utilisateur pour l'identification et ensuite la résolution des problèmes rencontrés.

Les différents modes ou caractéristiques de réalisation mentionnés ci-après peuvent être ajoutés indépendamment ou en combinaison les uns avec les autres, aux étapes du procédé d'exécution d'un service dans un réseau local tel que défini précédemment.

Dans un mode de réalisation particulier, le procédé d'exécution d'un service comprend en outre une fourniture par un dispositif de contrôle de paramètres de connexion à un réseau de transport propre au réseau local, permettant d'acheminer des données entre ladite instance et le point de terminaison.

Par réseau de transport propre au client, on entend les ressources établies ou configurées dans le réseau d'infrastructure opérateur permettant de connecter la terminaison du tunnel de service et l'instance du service propre au réseau local.

Le dispositif de contrôle permet au point de terminaison de tunnels de service d'identifier la passerelle d'accès qui transporte les données et de lui associer une instance du service correspondant au contexte client. Il permet également de mettre en place le réseau de transport servant à connecter la terminaison de tunnel de service avec l'instance du service propre au réseau local. Ceci permet d'acheminer des données depuis le réseau local vers l'instance de service propre au réseau local et réciproquement.

Par exemple, le dispositif de contrôle est un dispositif d'orchestration et le réseau de transport est mis en place à l'aide d'un contrôleur réseau.

Dans un mode de réalisation particulier, le tunnel de service est configuré de manière permanente entre la passerelle d'accès et le point de terminaison des tunnels de service. Ceci permet de diminuer le temps requis pour pouvoir exécuter le service.

Dans un mode de réalisation particulier, le tunnel est configuré par la passerelle d'accès lorsque le service doit être exécuté.

Ceci permet de limiter l'utilisation des ressources dans le réseau de l'opérateur lorsqu'aucun service n'est requis.

Dans un mode de réalisation particulier, le procédé d'exécution d'un service comprend une création par un dispositif de contrôle de ladite instance en fonction d'une demande d'exécution du service.

L'instance du service propre au réseau local est ainsi créée à la demande en fonction des besoins de l'utilisateur, d'un conseiller client ou bien encore d'un technicien de maintenance ou de tout autre tiers ou logiciel autorisé. Ceci permet de s'adapter aux demandes d'exécution de service et de pouvoir mettre en oeuvre ponctuellement des services dans le réseau étendu comme s'ils s'exécutaient localement. Les ressources de la machine physique sont économisées pour le système informatique dans l'infrastructure opérateur.

Dans un mode de réalisation particulier, le service correspondant à un enchaînement de services, une règle d'acheminement est configurée sur la passerelle d'accès pour acheminer dans le tunnel des données émises par un dispositif du réseau local sous contrôle.

Ceci permet de mettre en oeuvre un service pour un dispositif particulier du réseau local. A titre d'exemple illustratif, un contrôle d'accès, par exemple parental, est demandé pour un dispositif du réseau local. La règle d'acheminement permet d'acheminer dans le tunnel de service uniquement des données envoyées par ce dispositif. Ainsi l'instance du service peut mettre en oeuvre le contrôle d'accès et ensuite transmettre les données contrôlées directement (c'est-à-dire sans transiter par la passerelle d'accès) vers le réseau de communication étendu après avoir effectué une translation d'adresse.

Dans un mode de réalisation particulier, pour former un réseau local multi-sites interconnectant ledit réseau local et un autre réseau local, ladite instance met en oeuvre une fonction de commutateur permettant l'acheminement des données entre les sites.

Il est ainsi possible d'accéder à un dispositif d'un des réseaux locaux à partir d'un autre dispositif de l'autre des réseaux locaux. A titre illustratif, l'utilisateur d'un site peut découvrir et accéder à un serveur de stockage en réseau, connu sous le nom de serveur NAS (pour « Network Attached Storage ») situé sur l'autre site.

Selon une caractéristique particulière, ladite instance met en outre en oeuvre une fonction d'allocation d'adresse.

Selon un deuxième aspect, l'invention concerne également un système pour exécuter un service dans un réseau local à travers un réseau de communication étendu selon la revendication 8.

Les avantages énoncés pour le procédé d'exécution d'un service selon le premier aspect sont transposables directement au système.

Dans un mode de réalisation particulier, le système comprend en outre un dispositif de contrôle, ledit dispositif comprenant :
- un module de commande, agencé pour fournir à ladite instance des paramètres de connexion à un réseau de transport propre au réseau local, permettant d'acheminer les données entre ladite instance et le point de terminaison

Dans un mode de réalisation particulier, le système comprend en outre un dispositif de contrôle, ledit dispositif comprenant un module de virtualisation, agencé pour créer l'instance propre au réseau local sous forme virtualisée en fonction d'une demande d'exécution du service.

Dans un mode de réalisation particulier, la passerelle d'accès comprend en outre un module configuré pour classifier et acheminer dans le tunnel des données émises par un dispositif du réseau local sous contrôle en fonction d'une règle d'acheminement.

Selon un troisième aspect, l'invention concerne un programme pour un dispositif selon la revendication 12.

Selon un quatrième aspect, l'invention concerne un support d'enregistrement selon la revendication 13.

Les avantages énoncés pour le procédé d'exécution d'un service selon le premier aspect sont transposables directement au programme pour un dispositif et au support d'enregistrement.

L'invention sera mieux comprise à l'aide de la description suivante de modes de réalisation particuliers de la technique d'exécution d'un service, en référence aux dessins annexés sur lesquels :
- la figure 1 représente un réseau local et son environnement dans lesquels est mise en oeuvre la technique d'exécution d'un service selon un mode particulier de réalisation ;
- les figures 2a et 2b illustrent des étapes d'un procédé d'exécution d'un service selon des modes particuliers de réalisation ;
- la figure 3 représente une passerelle d'accès selon un mode particulier de réalisation ;
- la figure 4 représente un dispositif de contrôle selon un mode particulier de réalisation ;
- la figure 5 représente un point de terminaison de tunnels de service selon un mode particulier de réalisation.

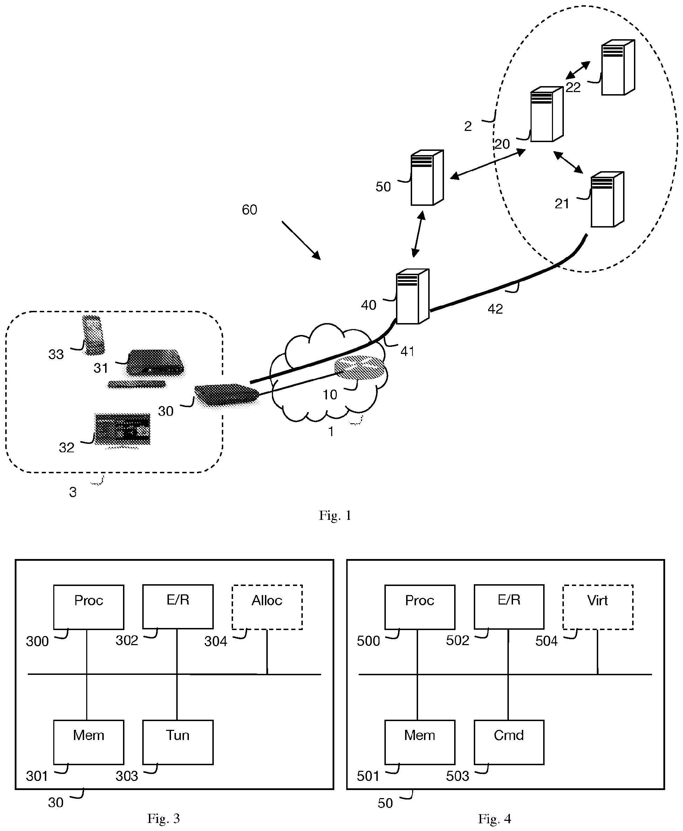

La **figure 1** représente un réseau de communication privé ou local 3. Le protocole IP (pour « Internet Protocol ») est utilisé par les dispositifs dans le réseau local pour communiquer entre eux et également pour communiquer avec un réseau de communication étendu ou WAN (pour « Wide Area Network »), tel que le réseau Internet. Le protocole IP peut aussi bien être de version 4 (IPv4) que de version 6 (IPv6).

Pour l'environnement représenté à la figure 1, on entend par réseau de communication local 3 un réseau de type LAN (« Local Area Network »). Ce réseau peut être en particulier un réseau domestique ou un réseau d'entreprise. Une passerelle d'accès 30 est agencée pour fournir à des dispositifs du réseau local 3 un accès vers le réseau de communication étendu (par exemple le réseau Internet) par l'intermédiaire d'un réseau d'accès 1 ou réseau de collecte. La passerelle d'accès 30 permet ainsi à des dispositifs 31-33 du réseau local 3 d'accéder au réseau étendu. La passerelle d'accès 30 assure l'acheminement des données entre le réseau d'accès 1 et le réseau local 3. Il s'agit par exemple d'une passerelle domestique ou bien d'une passerelle d'entreprise. Le réseau d'accès 1 est par exemple un réseau d'accès xDSL (pour « Digital Subscriber Line », le x indiquant qu'il peut s'agir d'un réseau ADSL, HSDL, VDSL, ...). Il peut également s'agir d'un réseau FTTH (pour « Fiber To The Home ») ou d'un réseau mobile tel qu'un réseau 3G ou 4G. Aucune limitation n'est attachée au type du réseau d'accès 1, ni au type de protocole utilisé. Un tel protocole peut être par exemple PPPoE pour « Point-to-Point Protocol over Ethernet », IPoE pour « Internet Protocol over Ethernet ».

Les dispositifs 31-33 du réseau local 3 peuvent être n'importe quels dispositifs, par exemple domestiques, disposant d'une connexion réseau filaire ou sans fil. A titre d'exemples illustratifs, différents dispositifs sont représentés sur la figure 1. Il peut s'agir par exemple d'un décodeur TV 31 (« Set-Top Box »), d'une télévision connectée 32 (connue sous le nom de « smart TV » en anglais), d'un terminal mobile 33.

Le réseau local 3 peut comprendre un réseau d'accès radio sans fil de type Wi-Fi, selon la norme IEEE 802.11 « Wireless LAN Medium Access Control (MAC) and Physical Layer (PHY) Spécifications» (802.11a/b/g/n/ac et autres). La passerelle d'accès 30 est agencée pour communiquer avec certains des dispositifs, par exemple le terminal mobile 33 du réseau local par l'intermédiaire du réseau d'accès radio. Les dispositifs du réseau local peuvent accéder au réseau de communication étendu (réseau Internet) par l'intermédiaire de la passerelle d'accès et du réseau d'accès 1. Les échanges entre ces dispositifs 31-33 s'effectuent par l'intermédiaire de la passerelle d'accès 30.

Aucune limitation n'est attachée au nombre de ces dispositifs 31-33 (dans la limite du nombre d'adresses IP allouables dans le réseau local), ni aux types de ces dispositifs.

Sur la figure 1, un point d'accès 10, localisé dans le réseau 1 de collecte de l'opérateur sert de point d'attache de la passerelle d'accès. Il permet d'acheminer des données vers le réseau de communication étendu. Sur la figure 1 est également représenté un point de terminaison 40 de tunnels de service établis avec des passerelles d'accès. Dans un mode de réalisation particulier, le point de terminaison 40 de tunnels est hébergé dans un point de présence PoP, pour « Point of Presence », de l'opérateur. Il est configuré pour interconnecter ou associer un tunnel, dit tunnel de service, avec un dispositif physique situé dans l'infrastructure de l'opérateur, accessible via le réseau de communication étendu. On appelle par la suite, instance d'un service propre au réseau local, une ressource logicielle destinée à exécuter le service dans le réseau local. Dans un mode de réalisation particulier, représenté sur la figure 1, il s'agit d'une machine physique 21, 22 destinée à mettre en oeuvre une instance virtualisée du service propre au réseau local administré par l'opérateur. Dans un autre mode de réalisation particulier, il s'agit d'une machine physique, apte à mettre en oeuvre le service pour un réseau local donné en créant une instance du service propre au réseau local par client. Cette machine physique peut être un serveur, un ordinateur,...Dans un mode de réalisation particulier, le tunnel de service est un tunnel GRE (pour « Generic Routing Encapsulation ») ou encore VxLAN (pour « Virtual Extended Local Area Network ») ou tout autre protocole permettant le transport de trames Ethernet à l'intérieur d'un protocole IP, tel qu'un réseau privé virtuel de niveau 2. Aucune limitation n'est attachée au type de tunnel. On souligne ici que plusieurs points de terminaison de tunnels de service peuvent être déployés par l'opérateur de réseau.

Un dispositif de contrôle 50 est agencé pour contrôler la mise en place des moyens matériels et logiciels nécessaires à l'exécution de l'instance du service propre au réseau local. Plus précisément, le dispositif de contrôle 50 est agencé pour communiquer dans le plan de contrôle avec le point de terminaison 40 et avec un dispositif destiné à exécuter une instance du service propre au réseau local, afin d'associer dans le plan de transport le point de terminaison 40 avec ce dispositif. Le dispositif de contrôle 50 met en oeuvre notamment une fonction de gestion et d'orchestration (par exemple telle que MANO pour « Management & Orchestration » en anglais). Dans le mode de réalisation représenté à la figure 1, le dispositif de contrôle 50 communique avec un dispositif de commande 20 d'une infrastructure virtualisée 2 pour associer le point de terminaison 40 avec des machines physiques 21, 22 mettant en oeuvre l'instance virtualisée du service. Aucune limitation n'est attachée au nombre de dispositifs de commande de l'infrastructure virtualisée et de machines physiques.

Dans un autre mode de réalisation, le dispositif de contrôle 50 communique avec une machine physique, apte à exécuter ce service. Plus précisément, une instance du service propre à un réseau local peut être créée sur cette machine physique sous la commande du dispositif de contrôle 50. Aucune limitation n'est attachée au nombre de machines physiques.

Dans l'environnement représenté à la figure 1, le point de terminaison de tunnels 40 et l'instance du service propre au réseau local communiquent par l'intermédiaire d'un réseau de transport 42 propre au client. Par réseau de transport propre au client, on entend les ressources établies ou configurées dans le réseau d'infrastructure opérateur permettant une communication entre la terminaison du tunnel de service et l'instance du service propre au réseau local. Ce réseau de transport 42 est par exemple identifié par un identifiant unique auprès de l'opérateur de réseau et associé au client. Dans d'autres environnements, l'instance du service propre au réseau local est co-localisée avec le point de terminaison 40. Dans ce cas, aucun réseau de transport n'est nécessaire, une simple connectivité locale étant mise en place.

La passerelle d'accès 30 dispose d'un accès au réseau de communication étendu. Une adresse dans le réseau IP lui est associée et lui permet d'être jointe à partir d'autres dispositifs connectés au réseau de communication étendu et de communiquer vers de tels autres dispositifs. Une adresse de ce type est connue sous la dénomination d'adresse publique quand il s'agit du protocole IPv4 ou d'adresse globale (GUA pour « Global Unique Address ») quand il s'agit du protocole IPv6.

Dans le mode de réalisation représenté à la figure 1, le dispositif de commande 20 de l'infrastructure virtualisée est notamment agencé pour créer, supprimer et gérer des instances virtualisées (ou machines virtuelles) reposant sur les machines physiques 21, 22. Le dispositif de commande 20 et les instances virtualisées permettent de fournir une application logicielle déployée dans un système informatique dans l'infrastructure opérateur. Les environnements de type informatique dans l'infrastructure opérateur se déclinent en trois grands niveaux d'offre selon le type de ressource mis à disposition. Le niveau « Infrastructure as a Service » (IaaS) a pour but de permettre d'accéder à des ressources matérielles (calcul, stockage, réseau) virtualisées s'appuyant sur un ensemble de ressources matérielles physiques. La couche « Software as a Service » (SaaS) vise à exposer des applications logicielles à destination des utilisateurs finaux. La couche intermédiaire « Platform as a Service » (PaaS) offre un ensemble d'outils et d'environnements d'exécution qui permettent de gérer le cycle de vie des applications. L'un des principaux intérêts de la virtualisation est de permettre la consolidation des ressources matérielles par mutualisation. Cela consiste à mettre en oeuvre simultanément un ensemble de ressources matérielles virtualisées au niveau d'une infrastructure matérielle physique commune (i.e. plusieurs machines virtuelles s'exécutant sur une même machine physique). On se place par la suite au niveau IaaS. A titre d'exemple illustratif, le gestionnaire d'instances virtualisées (ou VIM pour « Virtual Instance Manager ») est Openstack en mettant à contribution son module Nova et la librairie libvirt pour la couche de virtualisation.

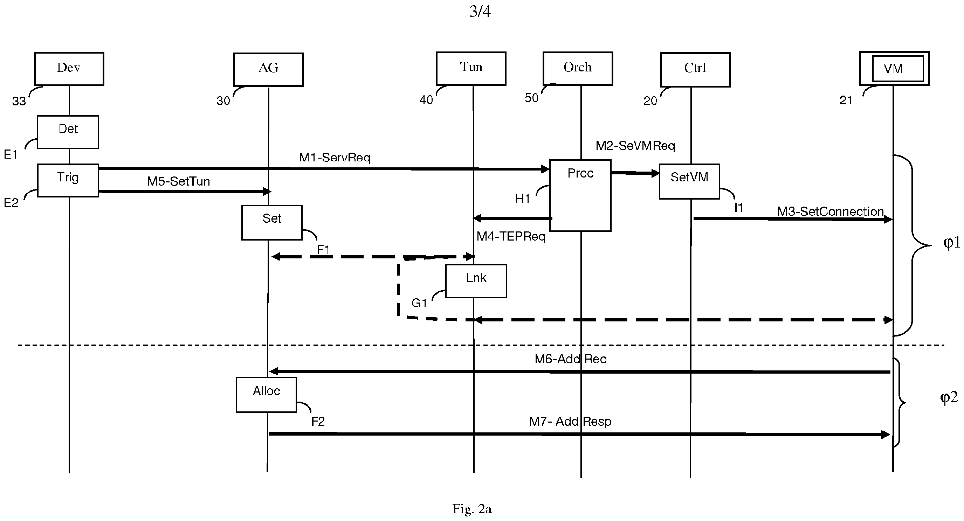

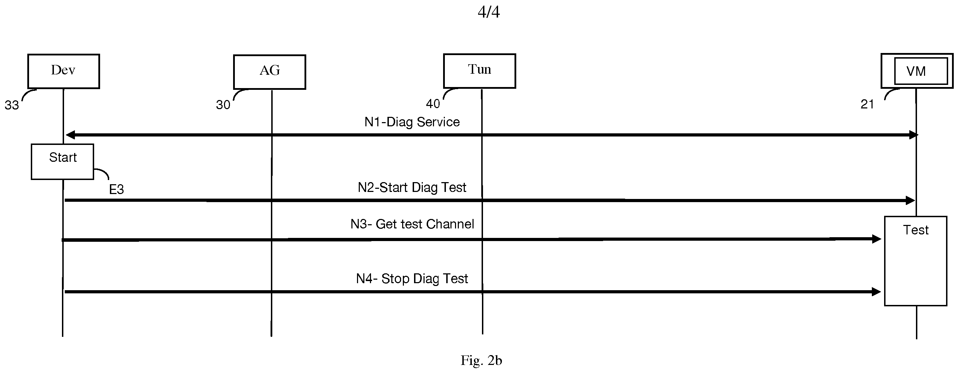

La technique d'exécution d'un service dans un réseau local à travers le réseau de communication étendu va maintenant être décrite de manière plus précise dans des modes particuliers de réalisation dans l'environnement de la figure 1 en relation avec les figures 2a et 2b.

La **figure 2a** décrit plus précisément les échanges entre un terminal de commande, la passerelle d'accès 30, le point de terminaison de tunnels de service 40, le dispositif de contrôle 50, le dispositif de commande 20 de l'infrastructure virtualisée et une instance virtualisée dans la machine physique 21 dans un mode de réalisation particulier.

On se place par la suite dans un mode de réalisation particulier où le terminal de commande est le terminal mobile 33, sur lequel s'exécute une application de gestion de la passerelle d'accès 30. Une telle application correspond par exemple à l'application « Ma Livebox » proposée par l'opérateur Orange à ses clients. Elle permet notamment d'effectuer des tests et des diagnostics à la demande d'un utilisateur.

Dans une étape E1, un défaut est détecté dans l'exécution d'un service.

Une phase ϕ1 d'intégration dans le réseau local d'une instance d'un service propre au réseau local et localisée dans le réseau de communication étendu débute. Plus précisément, on se place par la suite dans le cas d'un service de diagnostic.

Dans une étape E2, l'application s'exécutant sur le terminal mobile 33 déclenche les actions pour mettre en place un environnement de diagnostic. Plus précisément, l'application envoie un message M1 de demande de fourniture d'un service de diagnostic pour le réseau local, par exemple en fonction du défaut détecté, à destination du dispositif de contrôle 50. Toujours dans cette étape E2, l'application déclenche une configuration d'un tunnel de service 41 entre la passerelle d'accès 30 et le point de terminaison de tunnels de service 40. Plus précisément, l'application envoie un message M5 à la passerelle d'accès 30 de demande d'établissement d'un tunnel de service. Dans un autre mode de réalisation, l'établissement du tunnel de service est déclenché par le dispositif de contrôle 50 lors du traitement de la demande M1. Dans encore un autre mode de réalisation particulier, l'établissement du tunnel de service est déclenché par un dispositif d'administration, par exemple depuis un serveur d'administration, appelé serveur d'auto-configuration distant ACS (pour « Auto-configuration Server »).

Dans une étape H1, le dispositif de contrôle 50 reçoit et traite le message M1 de demande de fourniture d'un service de diagnostic pour le réseau local. Toujours dans cette étape H1, le dispositif de contrôle 50 commande au dispositif de commande 20 par un message M2 une création d'une instance du service demandé propre au réseau local, par exemple pour le mode de réalisation décrit, une instance virtualisée dans une machine physique 21 pour exécuter un service de diagnostic dans le réseau local 3. Le message M2 comprend notamment les paramètres nécessaires pour une connexion au réseau de transport 42 de l'instance du service propre au réseau local avec le point de terminaison 40. Le réseau local 3 est par exemple identifié par un identifiant unique auprès de l'opérateur de réseau et propre au client.

Dans une étape I1, le dispositif de commande 20 crée une instance virtualisée du service sur la machine physique 21 et demande par un message M3 à l'instance virtualisée d'établir une connexion avec le point de terminaison 40 par l'intermédiaire du réseau de transport 42 pour une exécution du service dans le réseau local 3. Dans un mode de réalisation particulier, l'établissement de cette connexion est réalisé à l'aide d'un contrôleur réseau de technologie de type SDN (pour « Software Defined Networking » en anglais).

En parallèle, dans une étape F1, la passerelle d'accès 30 reçoit le message M5 de demande d'établissement d'un tunnel de service 41 et déclenche l'établissement avec le point de terminaison 40 du tunnel identifié par ses identifiants de terminaison de tunnel TEP (pour « Tunnel End Point » en anglais). De façon connue, un tunnel est identifié par une adresse IP source (également appelée adresse IP locale du tunnel) et par une adresse IP de destination (également appelée adresse IP distante du tunnel) ou un nom de domaine de destination FQDN (pour « Fully Qualified Domain Name » en anglais). Le tunnel peut aussi être caractérisé par un type de tunnel (ex : GRE, VxLAN, etc...) et un ou plusieurs identifiants optionnels (ex : « GRE key » ou VNI pour « VxLAN Network Identifier », qualité de service). La configuration du tunnel de service n'est pas plus détaillée ici, celle-ci faisant partie des connaissances de l'homme du métier. Le tunnel 41, une fois configuré entre la passerelle d'accès 30 et le point de terminaison 40, est représenté sur la figure 2a sous la forme d'un trait plein entre la passerelle d'accès 30 et le point de terminaison 40.

De retour à l'étape H1, le dispositif de contrôle 50 commande au point de terminaison 40 par un message M4 d'associer le tunnel de service ayant pour source la passerelle d'accès 30 du réseau local avec le réseau de transport 42, permettant de joindre l'instance du service propre au réseau local.

Dans une étape G1, le point de terminaison 40 reçoit le message M4 et associe dans le plan de transport le tunnel de service établi avec la passerelle d'accès 30 (identifié notamment par l'adresse IP source du tunnel) avec le réseau de transport 42 propre au client, qui permet de joindre l'instance du service propre au réseau local.

Une fois cette association effectuée, le point de terminaison 40 achemine des données en provenance du réseau local 3 reçues au moyen du tunnel de service 41 vers la machine physique 21 sur laquelle l'instance virtualisée exécutant le service a été créée et réciproquement. Ainsi l'instance du service propre au réseau local, et dans ce mode de réalisation, l'instance virtualisée exécutant le service, peut accéder au réseau local 3 comme un dispositif physiquement localisé dans le réseau local. Il est ainsi possible de mettre en place un service dans le réseau local sans modification majeure du micro-logiciel de la passerelle d'accès 30. Cette mise en place s'effectue en temps réel et à la demande. A l'issue de cette étape, la phase ϕ1 d'intégration dans le réseau local d'une instance du service propre au réseau local et localisée dans le réseau de communication étendu est terminée.

Il est ici souligné que les étapes H1 et F1 sont décrites précédemment comme s'exécutant de manière séquentielle. Aucune limitation n'est attachée à cet ordre. Les étapes H1 et F1 peuvent être exécutées en parallèle ou dans un ordre inverse.

Une fois l'instance du service propre au réseau local intégrée dans le réseau local, une phase ϕ2 d'allocation d'une adresse du réseau local débute.

Dans un mode de réalisation particulier, l'instance du service propre au réseau local demande par un message M6 une allocation d'une adresse dans le réseau local et reçoit en retour dans un message M7 cette adresse. L'instance du service propre au réseau local devient alors un dispositif du réseau local adressable dans le réseau local. Par exemple, cette allocation d'adresse s'effectue conformément au protocole DHCP (pour « Dynamic Host Configuration Protocol »). Les messages échangés correspondent alors à un message DHCP Discover (M6) envoyé par l'instance du service, un message DHCP Offer (M7) comprenant une proposition d'adresse envoyé par la passerelle d'accès, suivis d'un message DHCP Request envoyé par l'instance du service pour demander l'allocation de l'adresse acquitté par un message DHCP Ack par la passerelle d'accès. La passerelle d'accès 30 achemine alors des données adressées à l'adresse allouée à l'instance du service par l'intermédiaire du tunnel de service 41 et reçoit des données comportant comme adresse source cette adresse allouée par l'intermédiaire du tunnel de service.

La phase ϕ2 d'allocation d'adresse dans le réseau local est alors terminée.

Une fois cette adresse allouée, l'instance du service exécute le service dans le réseau local. Cette exécution est effectuée à travers le réseau de communication étendu et comme si l'instance du service était localisée dans le réseau local. Il lui est donc possible d'interagir avec les autres dispositifs du réseau local et avec le réseau de communication étendu.

Dans le mode de réalisation décrit, le tunnel de service 41 entre la passerelle d'accès 30 et le point de terminaison 40 est établi et configuré sur demande d'une application de gestion. Dans un autre mode de réalisation particulier, le tunnel de service 41 est configuré sur le point de terminaison 40 et la passerelle d'accès 30 lors de la mise en service de celle-ci. Le tunnel de service est ainsi configuré de manière permanente.

Dans le mode de réalisation décrit, l'instance du service propre au réseau local est créée sur la machine physique 21 suite à la réception par le dispositif de contrôle 50 d'une demande de fourniture d'un service de diagnostic pour le réseau local, c'est-à-dire du message M1. Dans un autre mode de réalisation particulier, l'instance du service propre au réseau local est déjà créée et le dispositif de contrôle 50 fournit uniquement les paramètres nécessaires pour établir une connexion avec le point de terminaison 40 pour une exécution du service dans le réseau local 3.

Dans le mode de réalisation décrit, utilisant une infrastructure virtualisée, l'instance du service propre au réseau local est une instance virtualisée du service s'exécutant sur une machine physique 21.

La description précédente du procédé est aisément transposable à un mode de réalisation particulier dans lequel le dispositif de contrôle 50 communique avec une machine physique, apte à exécuter un service. Une instance du service propre au réseau local est alors créée sur cette machine physique sous la commande du dispositif de contrôle 50 à l'étape H1. La machine physique crée alors à l'étape I1 cette instance du service propre au réseau local.

Dans un mode de réalisation particulier, on se place dans le cadre d'une application de diagnostic du service TV en référence à la **figure 2b****.**

Dans un premier échange N1, l'application de diagnostic s'exécutant sur le terminal mobile 33 envoie une requête de découverte du service de diagnostic sur le réseau local 3 en mode diffusé (« broadcast » ou « multicast » en anglais) et reçoit en retour une notification du service de diagnostic en provenance de l'instance virtualisée. Différents protocoles peuvent être mis en oeuvre pour ce premier échange : mDNS pour « multicast Domain Name System » (par exemple Apple Bonjour), SSDP pour « Simple Service Discovery Protocol » (utilisé par UPnP pour « Universal Plug and Play »), NetBIOS, etc... A titre d'exemple illustratif, pour le protocole SSDP, la requête de découverte du service de diagnostic correspond à un message M-SEARCH et la notification du service de diagnostic correspond à un message NOTIFY.

Une fois le service de diagnostic découvert, dans une étape E3, l'application de diagnostic commande par un message N2 à l'instance virtualisée exécutant le service de démarrer un test de diagnostic TV. Dans cet exemple de réalisation, l'instance virtualisée demande à rejoindre un groupe multicast d'un canal de test IPTV et reçoit ainsi en retour des trames RTP (pour « Real-time Transport Protocol »). Des mesures de qualité peuvent être effectuées sur ces trames RTP. L'instance virtualisée reçoit les trames RTP de test par l'intermédiaire de la passerelle d'accès 30 comme si elle était localisée dans le réseau local. Le test s'effectue ainsi en conditions réelles de fonctionnement du réseau local 3.

L'application de diagnostic peut également demander dans un message N3 à recevoir un retour image du flux du canal de test qui a été testé. Ce message N3 est par exemple un message GET HTTP Test Channel Request.

Puis, une fois le test réalisé, l'application de diagnostic demande dans un message N4 d'arrêter le test de diagnostic TV. Les différents comptes-rendus de test préparés par l'application de diagnostic s'exécutant sur le terminal mobile 33 et par l'instance virtualisée sont envoyés par exemple à une entité d'exploitation et de maintenance gérée par l'opérateur. Un conseiller peut ensuite assister l'utilisateur dans la résolution de son problème technique.

Les différentes ressources mises en place dans le réseau de l'opérateur et dans le système informatique dans l'infrastructure opérateur peuvent ensuite être relâchées.

De même, le tunnel de service peut être détruit lorsqu'il n'est pas permanent.

Un autre cas d'usage est maintenant décrit. Il s'agit dans ce cas de construire un réseau local multi-sites. Pour ce cas d'usage, le service exécuté par l'instance propre au réseau local est un service de commutateur permettant l'acheminement des données entre les sites. On se place par la suite dans le cas particulier où les sites sont au nombre de deux.

Dans un premier mode de réalisation, l'instance du service propre au réseau local correspond à la fonction de commutateur permettant l'acheminement des données entre les deux sites. Ainsi, un premier tunnel de service est établi entre la première passerelle d'accès et le point de terminaison 40 et un deuxième tunnel de service est établi entre la deuxième passerelle d'accès et le point de terminaison 40. On souligne ici que le point de terminaison n'est pas obligatoirement le même pour ces deux tunnels de service. Le dispositif de contrôle 50 commande alors au point de terminaison d'associer la connexion avec la première passerelle d'accès (c'est-à-dire le premier tunnel de service) avec l'instance du service propre au réseau local. Il fait ensuite de même avec le deuxième tunnel de service qui est associé avec la même instance du service propre au réseau local. Le dispositif de contrôle 50 configure également la fonction d'allocation d'adresse des passerelles d'accès pour éviter tout conflit d'adresses IP entre les dispositifs des différents sites. Dans un mode de réalisation particulier, un serveur d'administration, tel qu'un serveur d'auto-configuration ACS, configure la fonction d'allocation d'adresse des passerelles d'accès pour éviter tout conflit d'adresses IP entre les dispositifs des différents sites. Dans un mode de réalisation particulier, l'instance du service propre au réseau local est instanciée directement au niveau du point de terminaison de tunnels 40. Dans un autre mode de réalisation particulier, elle est accessible par l'intermédiaire d'un réseau de transport : ceci nécessite donc pour le ou les points de terminaisons de tunnel d'associer le tunnel de service de chaque site avec un réseau de transport spécifique permettant d'envoyer le trafic vers la même instance locale de service. On constate qu'ainsi les dispositifs du premier site et ceux du deuxième site sont connectés comme s'ils étaient co-localisés. Il n'y a pas de recouvrement d'adresse possible entre les deux réseaux locaux. Un réseau local multi-sites est ainsi formé.

Dans un deuxième mode de réalisation, la fonction d'allocation d'adresse est mise en oeuvre sur une seule passerelle d'accès parmi les deux passerelles d'accès disponibles. Le dispositif de contrôle 50 désactive alors la fonction d'allocation d'adresse sur la deuxième passerelle d'accès (DHCP local) pour la remplacer par exemple par une fonction de relais DHCP et la configure pour éviter tout conflit d'adresse IP. La première passerelle d'accès reçoit alors les demandes d'allocation d'adresse en provenance des dispositifs du réseau local localisés dans le deuxième site et leur alloue en retour une adresse. On constate qu'ainsi les dispositifs du premier site et ceux du deuxième site sont connectés comme s'ils étaient co-localisés. Il n'y a pas de recouvrement d'adresse possible entre les deux réseaux locaux. Un réseau local multi-sites est ainsi formé.

Dans un troisième mode de réalisation, la fonction d'allocation d'adresse est en outre mise en oeuvre par une instance du service propre au réseau local multi-sites. L'instance du service propre au réseau local joue alors un rôle de serveur DHCP pour les dispositifs du réseau local. La phase ϕ1 d'intégration dans le réseau local d'une instance du service propre au réseau local et localisée dans le réseau de communication étendu est d'abord mise en oeuvre pour le premier site, plus précisément avec la première passerelle d'accès. La connexion entre la première passerelle d'accès et l'instance virtualisée exécutant le service d'allocation d'adresse, par l'intermédiaire du point de terminaison 40 et d'un réseau de transport le cas échéant, est établie. L'instance virtualisée reçoit les demandes d'allocation d'adresse en provenance des dispositifs du réseau local localisés dans le premier site et leur alloue en retour une adresse. Pour le protocole DHCP, les messages échangés correspondent alors à un message DHCP Discover envoyé par un dispositif du réseau local, un message DHCP Offer comprenant une proposition d'adresse envoyé par l'instance virtualisée, suivis d'un message DHCP Request envoyé par le dispositif du réseau local pour demander l'allocation de l'adresse acquitté par un message DHCP Ack par l'instance virtualisée. Pour former un réseau local multi-sites interconnectant le réseau local situé dans le premier site et un autre réseau local situé dans un deuxième site, la phase ϕ1 d'intégration est de nouveau mise en oeuvre pour configurer un deuxième tunnel de service entre la deuxième passerelle d'accès de ce deuxième site et le point de terminaison 40 et pour associer le deuxième tunnel de service configuré et la connexion entre l'instance virtualisée et le point de terminaison par l'intermédiaire d'un réseau de transport le cas échéant. Ainsi le point de terminaison 40 achemine des données en provenance de ce deuxième site reçues au moyen du deuxième tunnel de service vers la machine physique 21 sur laquelle l'instance virtualisée exécutant le service a été créée et réciproquement. Le dispositif de contrôle 50 configure les passerelles d'accès pour désactiver les serveurs DHCP locaux (qui sont remplacés par des fonctions de relais DHCP) et configurer une adresse IP privée spécifique à chacune des passerelles d'accès. L'instance virtualisée reçoit alors les demandes d'allocation d'adresse en provenance des dispositifs du réseau local localisés dans le deuxième site et leur alloue en retour une adresse. On constate qu'ainsi les dispositifs du premier site et ceux du deuxième site sont connectés comme s'ils étaient co-localisés. Il n'y a pas de recouvrement d'adresse possible entre les deux réseaux locaux. Un réseau local multi-sites est ainsi formé.

A titre d'exemple illustratif, pour ces trois modes de réalisation particuliers, il est alors possible à un dispositif du premier site d'accéder à un dispositif de stockage de données localisé dans le deuxième site, tel qu'un serveur NAS (pour « Network Attached Storage »), à l'aide de protocoles limités à un réseau domestique comme le SAMBA, Netbios ou encore DLNA.

Ce cas d'usage a été décrit pour un réseau local formé de deux sites. Aucune limitation n'est associée au nombre de sites qu'il est ainsi possible de connecter.

Un autre cas d'usage est maintenant décrit. Le service exécuté par l'instance virtualisée est un service de contrôle d'accès, par exemple parental. Ce service vise à limiter l'accès de certains dispositifs du réseau local au réseau Internet et au réseau local. Ce contrôle d'accès permet par exemple à un utilisateur principal du réseau local de définir pour un dispositif du réseau local sous contrôle, des sites Web interdits ou autorisés, un quota de trafic vers internet (données et/ou temps) et/ou des périodes autorisées d'utilisation. Le réseau local peut correspondre aussi bien à un réseau domestique qu'à un réseau d'entreprise, dans lesquels une règle de contrôle d'accès doit être appliquée à un ou plusieurs dispositifs. Lorsque ce contrôle d'accès est mis en oeuvre par la passerelle d'accès, celle-ci doit alors inspecter l'ensemble ou une partie des paquets de données qu'elle reçoit en provenance et à destination de dispositifs du réseau local, afin de détecter si cet accès est autorisé ou non. Dans le mode de réalisation qui est décrit, le service de contrôle d'accès est mis en oeuvre par une instance virtualisée créée sur une machine physique. Toutefois, afin que cette instance virtualisée puisse effectuer le contrôle des paquets de données émis par un dispositif du réseau local sous contrôle, les paquets doivent d'abord être classifiés par une fonction de classification et une règle d'acheminement correspondant à cette classification est configurée sur la passerelle d'accès 30 pour acheminer dans le tunnel des données émises par ce dispositif du réseau local sous contrôle. Cette règle d'acheminement peut être configurée localement sur la passerelle d'accès 30 au moyen d'une interface de programmation applicative API (pour « Application Program Interface »), ou bien à partir d'un dispositif d'administration de la passerelle d'accès, ou bien encore à partir du dispositif de contrôle 50. Grâce à cette règle d'acheminement, l'instance virtualisée exécutant le service de contrôle d'accès reçoit ainsi tous les paquets de données émis par le dispositif sous contrôle correspondant au trafic Internet et peut alors bloquer, rediriger ou acheminer les paquets de données vers le réseau Internet. Pour acheminer des paquets de données non bloqués vers le réseau Internet, une deuxième instance virtualisée exécutant un service de translation d'adresse est créée. Plus précisément, cette deuxième instance virtualisée effectue pour les paquets de données, émis par le dispositif sous contrôle et non bloqués par le service de contrôle d'accès, une translation de l'adresse dans le réseau local, dite adresse privée, de ce dispositif vers une adresse publique associée au service de contrôle d'accès, en tant qu'adresse source des paquets de données. Ceci permet d'éviter que les paquets de données transitent de nouveau par le tunnel de service afin d'être acheminés par la passerelle d'accès. L'utilisation des ressources dans le réseau de l'opérateur est ainsi optimisée. Les paquets de données reçus en réponse, en provenance du réseau Internet, ont comme adresse de destination cette adresse publique associée au service de contrôle d'accès et sont ainsi traités par le service de contrôle d'accès. La fonction de translation d'adresse remplace l'adresse de destination des paquets de données par l'adresse IP privée du dispositif. Ceci permet ensuite l'envoi du trafic dans le réseau de transport propre au client vers le point de terminaison de tunnels et ensuite vers la passerelle d'accès par l'intermédiaire du tunnel de service. Le service correspond ainsi à un chaînage de services, règle d'acheminement, contrôle d'accès et translation d'adresse pour acheminer les paquets de données.

Dans un mode de réalisation particulier, le service de contrôle d'accès est mutualisé entre plusieurs clients. Dans ce cas, un identifiant de client (par exemple VLAN-ID, VNI, métadonnées, etc...) est géré en complément des identifiants de dispositifs pour isoler le trafic des clients.

Le procédé d'exécution d'un service a été décrit dans différents modes de réalisation pour un terminal de commande correspondant au terminal mobile 33, sur lequel s'exécute une application de gestion de la passerelle d'accès 30. Cette description est transposable aisément à d'autres types de terminaux de commande. Dans un mode de réalisation particulier, un défaut est rencontré par le client. Ce dernier initie depuis un dispositif d'administration l'étape E1 de détection et d'identification du défaut et le dispositif d'administration envoie au dispositif de contrôle 50 une demande d'identification de défaut en précisant le service affecté par le défaut le cas échéant. A l'étape H1, le dispositif de contrôle 50 reçoit la demande d'identification de défaut, commande au dispositif de commande 20 par un message M2 une création d'une instance virtualisée sur une machine physique 21. Le dispositif de contrôle 50 déclenche également une configuration d'un tunnel de service 41 entre la passerelle d'accès 30 et le point de terminaison 40. Plus précisément, le dispositif de contrôle 50 envoie à la passerelle d'accès 30 un message M5 de demande d'établissement d'un tunnel de service.

La passerelle d'accès 30 reçoit (étape F1) le message M5 de demande d'établissement d'un tunnel de service et déclenche l'établissement avec le point de terminaison 40 du tunnel identifié par ses identifiants de terminaison de tunnel TEP. Le dispositif de contrôle 50 commande (étape H1) au point de terminaison 40 par un message M4 d'associer le tunnel de service ayant pour source la passerelle d'accès 30 du réseau local avec le réseau de transport 42, permettant de joindre l'instance du service propre au réseau local. Dans une étape G1, le point de terminaison 40 reçoit le message M4 et associe dans le plan de transport le tunnel de service identifié par l'adresse IP source du tunnel et sa terminaison de tunnel avec le réseau de transport 42 entre le point de terminaison 40 et l'instance du service propre au réseau local. Une fois cette association effectuée, le point de terminaison 40 achemine des données en provenance du réseau local 3 reçues au moyen du tunnel vers la machine physique 21 sur laquelle l'instance virtualisée exécutant le service a été créée et réciproquement. Une fois le service exécuté, l'instance virtualisée peut envoyer des rapports d'exécution au dispositif de contrôle 50 et au dispositif d'administration.

Dans les différents modes de réalisation décrits, la passerelle d'accès 30 reçoit une demande M5 d'établissement d'un tunnel de service. Les identifiants de terminaison de tunnel et l'adresse du point de terminaison 40, appelés par la suite paramètres de configuration du tunnel, doivent être fournis à la passerelle d'accès 30, afin de pouvoir configurer le tunnel de service. Dans un mode de réalisation particulier, les paramètres de configuration du tunnel sont envoyés à la passerelle d'accès 30 dans la demande d'établissement du tunnel de service. Dans un autre mode de réalisation, les paramètres de configuration du tunnel sont fournis à la passerelle d'accès 30 lors de sa configuration dans un modèle de données (« data model » en anglais) décrivant la configuration du tunnel de service. Ce modèle de données peut être transmis à la passerelle d'accès 30 par le serveur d'auto-configuration distant ACS.

Certains des modes de réalisation qui ont été décrits présentent des échanges entre un dispositif de contrôle 50 et un dispositif de commande 20 d'un système informatique dans l'infrastructure opérateur. Ils peuvent être aisément adaptés à un environnement dans lequel le dispositif de contrôle 50 joue également le rôle du dispositif de commande 20 du système informatique dans l'infrastructure opérateur.

Les modes de réalisation ont été décrits dans un environnement pour lequel la machine physique hébergeant l'instance du service propre au réseau local se situe à distance du point de terminaison de tunnels de service. Cette description est aisément transposable à des modes de réalisation dans lesquels la machine physique hébergeant l'instance du service propre au réseau local est co-localisée avec le point de terminaison de tunnels de service, voire même hébergée sur ce dernier. Dans ce cas, le réseau de transport 42 propre au client correspond à une liaison locale.

Les modes de réalisation ont été décrits pour différents services s'exécutant sur une instance du service propre au réseau local. Aucune limitation n'est attachée à ces services. Le procédé d'exécution d'un service peut ainsi être mis en oeuvre pour tout type de service requérant une connectivité au réseau local. Ce procédé ne requiert pas de modification sur le réseau local opérationnel.

Nous allons maintenant décrire une passerelle d'accès 30 dans un mode particulier de réalisation en référence à la **figure 3****.** Une telle passerelle comprend notamment :
- un processeur 300 pour exécuter des instructions de code de modules logiciels ;
- une zone mémoire 301, agencée pour mémoriser un programme qui comprend des instructions de code pour mettre en oeuvre les étapes du procédé d'exécution d'un service, tel que décrit précédemment ;
- une mémoire de stockage, non représentée sur la figure 3, agencée pour stocker des données utilisées lors de la mise en oeuvre du procédé d'exécution d'un service ;
- un module de communication 302, formant une interface de communication avec un réseau local et avec un réseau de communication, agencé pour communiquer avec des dispositifs du réseau local ou accessibles par l'intermédiaire du réseau de communication ;
- un module de configuration 303, agencé pour configurer un tunnel de service avec un point de terminaison de tunnels de service.

Dans un mode de réalisation particulier, le module de configuration 303 est agencé pour configurer le tunnel de service lorsque le service doit être exécuté.

Dans un mode de réalisation particulier, la passerelle d'accès 30 comprend en outre un module 304 d'allocation d'adresse, agencé pour allouer une adresse dans le réseau local à un dispositif du réseau local. Un tel module correspond par exemple à un serveur DHCP.

Dans un mode de réalisation particulier, la passerelle d'accès 30 comprend en outre module configuré pour classifier et acheminer dans le tunnel des données émises par un dispositif sous contrôle du réseau local en fonction d'une règle d'acheminement.

Il est ici souligné que la passerelle d'accès 30 comprend également d'autres modules de traitement, non représentés sur la figure 3, agencés pour mettre en oeuvre les différentes fonctions d'une telle passerelle.

Nous allons maintenant décrire un dispositif de contrôle 50 dans un mode particulier de réalisation en référence à la **figure 4****.** Un tel dispositif comprend notamment :
- un processeur 500 pour exécuter des instructions de code de modules logiciels ;
- une zone mémoire 501, agencée pour mémoriser un programme qui comprend des instructions de code pour mettre en oeuvre les étapes du procédé d'exécution d'un service, tel que décrit précédemment ;
- une mémoire de stockage, non représentée sur la figure 4, agencée pour stocker des données utilisées lors de la mise en oeuvre du procédé d'exécution d'un service ;
- un module de communication 502, formant une interface de communication avec un réseau de communication, agencé pour communiquer avec des dispositifs accessibles par l'intermédiaire du réseau de communication ;
- un module de commande 503, agencé pour fournir à une instance du service propre à un réseau local des paramètres de connexion à un réseau de transport propre au réseau local, permettant d'acheminer des données entre l'instance du service et un point de terminaison de tunnel.

Dans un mode de réalisation particulier, le dispositif de contrôle 50 joue le rôle d'un dispositif de commande d'une infrastructure virtualisée. Le dispositif de contrôle 50 comprend alors un module de virtualisation 504, agencé pour créer l'instance de service propre au réseau local sous forme virtualisée en fonction d'une demande d'exécution du service.

Il est ici souligné que le dispositif de contrôle 50 comprend également d'autres modules de traitement, non représentés sur la figure 4, agencés pour mettre en oeuvre les différentes fonctions d'un tel dispositif.

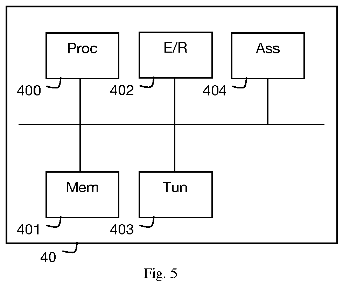

Nous allons maintenant décrire un point de terminaison 40 dans un mode particulier de réalisation en référence à la **figure 5****.** Un tel point de terminaison comprend notamment :
- un processeur 400 pour exécuter des instructions de code de modules logiciels ;
- une zone mémoire 401, agencée pour mémoriser un programme qui comprend des instructions de code pour mettre en oeuvre les étapes du procédé d'exécution d'un service, tel que décrit précédemment ;
- une mémoire de stockage, non représentée sur la figure 5, agencée pour stocker des données utilisées lors de la mise en oeuvre du procédé d'exécution d'un service ;
- un module de communication 402, formant une interface de communication avec un réseau de communication, agencé pour communiquer avec des dispositifs accessibles par l'intermédiaire du réseau de communication ;
- un module de configuration 403, agencé pour configurer le tunnel de service avec une passerelle d'accès ;
- un module d'association 404, agencé pour acheminer des données en provenance du réseau local reçues au moyen du tunnel vers une instance d'un service propre à un réseau local et pour acheminer des données reçues de l'instance du service vers le réseau local au moyen du tunnel.

Dans un mode de réalisation particulier, le module d'association 404 est notamment agencé pour associer le tunnel de service avec un réseau de transport 42 propre au réseau local, afin d'acheminer les données.

Dans un mode de réalisation particulier, le point de terminaison comprend en outre un module d'identification du client, non représenté sur la figure 5, agencé pour autoriser un établissement d'un tunnel de service pour une passerelle d'accès 30.

Il est ici souligné que le point de terminaison 40 comprend également d'autres modules de traitement, non représentés sur la figure 5, agencés pour mettre en oeuvre les différentes fonctions d'un tel point de terminaison.

L'invention concerne en outre un système 60 pour exécuter un service dans un réseau local. Ce système comprend notamment :
- une passerelle d'accès 30 administrée par un opérateur de réseau de communication, par l'intermédiaire de laquelle des dispositifs 31-33 du réseau local accèdent à un réseau de communication étendu, cette passerelle comprenant un module de configuration 303, agencé pour configurer un tunnel de service avec un point de terminaison de tunnels de service ;
- le point de terminaison 40, celui-ci comprenant :
   - un module de configuration 403, agencé pour configurer le tunnel de service avec la passerelle d'accès et
   - un module d'association 404, agencé pour acheminer des données en provenance du réseau local reçues au moyen du tunnel vers une instance du service propre au réseau local et pour acheminer des données reçues de l'instance du service vers le réseau local au moyen du tunnel.

Dans un mode de réalisation particulier, le système 60 comprend en outre un dispositif de contrôle 50, ce dispositif comprenant un module de commande 503, agencé pour fournir à l'instance du service propre au réseau local des paramètres de connexion à un réseau de transport propre au réseau local, permettant d'acheminer des données entre l'instance du service et le point de terminaison de tunnels de service.

Dans un mode de réalisation particulier, le système 60 comprend en outre un dispositif de contrôle 50, ce dispositif comprenant un module de virtualisation 504, agencé pour créer l'instance propre au réseau local sous forme virtualisée en fonction d'une demande d'exécution du service.

La technique d'exécution d'un service est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, le module 303 est agencé pour mettre en oeuvre le procédé d'exécution d'un service précédemment décrit. Il s'agit de préférence de modules logiciels comprenant des instructions logicielles pour faire exécuter celles des étapes du procédé d'exécution d'un service précédemment décrit, mises en oeuvre par une passerelle d'accès. L'invention concerne donc aussi :
- un programme pour une passerelle d'accès, comprenant des instructions de code de programme destinées à commander l'exécution de celles des étapes du procédé d'exécution d'un service précédemment décrit, lorsque ledit programme est exécuté par cette passerelle d'accès ;
- un support d'enregistrement lisible par une passerelle d'accès sur lequel est enregistré le programme pour une passerelle.

Dans un mode de réalisation particulier, les modules 503, 504 sont agencés pour mettre en oeuvre le procédé d'exécution d'un service précédemment décrit. Il s'agit de préférence de modules logiciels comprenant des instructions logicielles pour faire exécuter celles des étapes du procédé d'exécution d'un service précédemment décrit, mises en oeuvre par un dispositif de contrôle. L'invention concerne donc aussi :
- un programme pour un dispositif de contrôle, comprenant des instructions de code de programme destinées à commander l'exécution de celles des étapes du procédé d'exécution d'un service précédemment décrit, lorsque ledit programme est exécuté par ce dispositif de contrôle ;
- un support d'enregistrement lisible par un dispositif de contrôle sur lequel est enregistré le programme pour un dispositif de contrôle.

Dans un mode de réalisation particulier, les modules 403, 404 sont agencés pour mettre en oeuvre le procédé d'exécution d'un service précédemment décrit. Il s'agit de préférence de modules logiciels comprenant des instructions logicielles pour faire exécuter celles des étapes du procédé d'exécution d'un service précédemment décrit, mises en oeuvre par un point de terminaison de tunnels de service. L'invention concerne donc aussi :
- un programme pour un point de terminaison, comprenant des instructions de code de programme destinées à commander l'exécution de celles des étapes du procédé d'exécution d'un service précédemment décrit, lorsque ledit programme est exécuté par ce point de terminaison ;
- un support d'enregistrement lisible par un point de terminaison sur lequel est enregistré le programme pour un point de terminaison.

Les modules logiciels peuvent être stockés dans ou transmis par un support de données. Celui-ci peut être un support matériel de stockage, par exemple un CD-ROM, un moyen d'enregistrement magnétique, par exemple une disquette magnétique ou un disque dur. D'autre part, le support de données peut être un support de transmission tel qu'un signal électrique, optique ou radio, qui peut être acheminé via un câble électrique ou optique, par radio ou par d'autres moyens. Les instructions de code de programme peuvent être en particulier téléchargées sur un réseau de type Internet.

Alternativement, le support de données peut être un circuit intégré dans lequel le programme est incorporé, le circuit étant adapté pour exécuter ou pour être utilisé dans l'exécution du procédé d'exécution d'un service décrit précédemment.

## Revendications

1. Procédé d'exécution d'un service dans un réseau local (3) à travers un réseau de communication étendu, par l'intermédiaire d'une passerelle d'accès (30) permettant à des dispositifs (31-33) du réseau local d'accéder au réseau étendu, ledit procédé comprenant :
- configuration (F1) par la passerelle d'accès et par un point de terminaison de tunnels (40) d'un tunnel de service (41) entre ladite passerelle et ledit point de terminaison, ledit point de terminaison étant agencé pour connecter le tunnel de service configuré avec une instance du service propre au réseau local afin d'acheminer des données en provenance du réseau local reçues au moyen du tunnel vers ladite instance et d'acheminer des données reçues de ladite instance vers le réseau local au moyen du tunnel, ladite instance de service étant destinée à être exécutée sur un dispositif physique accessible à travers le réseau de communication étendu, ledit tunnel de service permettant un transport de données au niveau de la couche de liaison de données ;
- allocation (F2) par la passerelle d'accès d'une adresse dans le réseau local à ladite instance ;
- exécution dudit service par ladite instance en tant que dispositif du réseau local à travers le réseau de communication étendu.

2. Procédé d'exécution d'un service selon la revendication 1, ledit procédé comprenant en outre une fourniture (H1) par un dispositif de contrôle (50) de paramètres de connexion à un réseau de transport (42) propre au réseau local à destination de ladite instance, pour établir une connexion entre ladite instance et le point de terminaison par l'intermédiaire dudit réseau de transport afin d'acheminer des données.

3. Procédé d'exécution d'un service selon la revendication 1, dans lequel le tunnel est configuré par la passerelle d'accès lorsque le service doit être exécuté.

4. Procédé d'exécution d'un service selon la revendication 1, comprenant une création par un dispositif de contrôle (50) de ladite instance en fonction d'une demande d'exécution du service.

5. Procédé d'exécution d'un service selon la revendication 1, dans lequel, le service correspondant à un enchaînement de services, une règle d'acheminement est configurée sur la passerelle d'accès pour acheminer dans le tunnel des données émises par un dispositif du réseau local sous contrôle.

6. Procédé d'exécution d'un service selon la revendication 1, dans lequel pour former un réseau local multi-sites interconnectant ledit réseau local et un autre réseau local, ladite instance met en oeuvre une fonction de commutateur permettant l'acheminement des données entre les sites.

7. Procédé d'exécution d'un service selon la revendication 6, dans lequel ladite instance met en outre en oeuvre une fonction d'allocation d'adresse.

8. Système (60) pour exécuter un service dans un réseau local à travers un réseau de communication étendu, ledit système comprenant :
- une passerelle d'accès (30) permettant à des dispositifs (31-33) du réseau local d'accéder au réseau étendu, ladite passerelle comprenant :
- un module de configuration (303), agencé pour configurer un tunnel de service avec un point de terminaison de tunnels de service, ledit tunnel de service permettant un transport de données au niveau de la couche de liaison de données ;
- un module d'allocation d'une adresse dans le réseau local à une instance du service propre au réseau local, ladite instance de service étant destinée à être exécutée sur un dispositif physique accessible à travers le réseau de communication étendu ;
- ledit point de terminaison (40) comprenant :
- un module de configuration (403), agencé pour configurer le tunnel de service avec la passerelle d'accès et
- un module d'association (404), agencé pour connecter le tunnel de service configuré avec l'instance du service propre au réseau local afin d'acheminer des données en provenance du réseau local reçues au moyen du tunnel vers ladite instance et d'acheminer des données reçues de ladite instance vers le réseau local au moyen du tunnel.

9. Système selon la revendication 8, comprenant en outre un dispositif de contrôle (50), ledit dispositif comprenant :
- un module de commande (503), agencé pour fournir à destination de ladite instance des paramètres de connexion à un réseau de transport propre au réseau local, pour établir une connexion entre ladite instance et le point de terminaison par l'intermédiaire dudit réseau de transport afin d'acheminer des données.

10. Système selon la revendication 8, comprenant en outre un dispositif de contrôle (50), ledit dispositif comprenant un module de virtualisation (504), agencé pour créer l'instance propre au réseau local sous forme virtualisée en fonction d'une demande d'exécution du service.

11. Système selon la revendication 8, dans lequel la passerelle d'accès comprend en outre un module configuré pour classifier et acheminer dans le tunnel des données émises par un dispositif du réseau local sous contrôle en fonction d'une règle d'acheminement.

12. Programme pour un dispositif, comprenant des instructions de code de programme destinées à commander l'exécution de celles des étapes du procédé d'exécution d'un service selon l'une des revendications 1 à 7 mises en oeuvre par le dispositif, lorsque lesdites instructions sont exécutées par un processeur.

13. Support d'enregistrement lisible par un dispositif sur lequel est enregistré le programme selon la revendication 12.

## Patentansprüche

1. Verfahren zur Ausführung eines Dienstes in einem lokalen Netz (3) über ein Weitverkehrs-Kommunikationsnetz mittels eines Access Gateways (30), mit dem Vorrichtungen (31-33) des lokalen Netzes auf das Weitverkehrsnetz zugreifen können, das Verfahren umfassend:
- Konfigurieren (F1), durch den Access Gateway und durch einen Tunnelendpunkt (40), eines Diensttunnels (41) zwischen dem Gateway und dem Endpunkt, wobei der Endpunkt dafür angeordnet ist, den konfigurierten Diensttunnel mit einer dem lokalen Netz eigenen Instanz des Dienstes zu verbinden, um Daten vom lokalen Netz, die mittels des Tunnels empfangen werden, zu der Instanz zu übermitteln und Daten, die von der Instanz empfangen werden, mittels des Tunnels zum lokalen Netz zu übermitteln, wobei die Dienstinstanz dazu bestimmt ist, auf einer physischen Vorrichtung ausgeführt zu werden, die über das Weitverkehrs-Kommunikationsnetz zugänglich ist, wobei der Diensttunnel einen Transport von Daten an der Datenverbindungsschicht ermöglicht;
- Zuweisen (F2) einer Adresse im lokalen Netz an die Instanz durch den Access Gateway;
- Ausführen des Dienstes durch die Instanz als Vorrichtung des lokalen Netzes über das Weitverkehrs-Kommunikationsnetz.

2. Verfahren zur Ausführung eines Dienstes nach Anspruch 1, das Verfahren ferner umfassend ein Bereitstellen (H1) von Parametern zur Verbindung mit einem Transportnetz (42), das dem lokalen Netz eigen ist, an die Instanz durch eine Steuerungsvorrichtung (50), um eine Verbindung zwischen der Instanz und dem Endpunkt mittels des Transportnetzes herzustellen, um Daten zu übermitteln.

3. Verfahren zur Ausführung eines Dienstes nach Anspruch 1, wobei der Tunnel vom Access Gateway konfiguriert wird, wenn der Dienst ausgeführt werden soll.

4. Verfahren zur Ausführung eines Dienstes nach Anspruch 1, umfassend ein Erzeugen der Instanz durch eine Steuerungsvorrichtung (50) in Abhängigkeit von einer Anforderung zur Ausführung des Dienstes.

5. Verfahren zur Ausführung eines Dienstes nach Anspruch 1, wobei, der Dienst einer Verkettung von Diensten entsprechend, eine Übermittlungsregel auf dem Access Gateway konfiguriert wird, um Daten, die von einer unter Kontrolle befindlichen Vorrichtung des lokalen Netzes gesendet werden, im Tunnel zu übermitteln.

6. Verfahren zur Ausführung eines Dienstes nach Anspruch 1, wobei zur Bildung eines lokalen Netzes mit mehreren Standorten, das das lokale Netz und ein anderes lokales Netz verbindet, die Instanz eine Umschaltfunktion verwendet, die die Übermittlung der Daten zwischen den Standorten ermöglicht.

7. Verfahren zur Ausführung eines Dienstes nach Anspruch 6, wobei die Instanz ferner eine Adresszuweisungsfunktion verwendet.

8. System (60) zur Ausführung eines Dienstes in einem lokalen Netz über ein Weitverkehrs-Kommunikationsnetz, das System umfassend:
- einen Access Gateway (30), mit dem Vorrichtungen (31-33) des lokalen Netzes auf das Weitverkehrsnetz zugreifen können, das Gateway umfassend:
- ein Konfigurationsmodul (303), das dafür angeordnet ist, einen Diensttunnel mit einem Diensttunnel-Endpunkt zu konfigurieren, wobei der Diensttunnel einen Transport von Daten an der Datenverbindungsschicht ermöglicht;
- ein Modul zur Zuweisung einer Adresse im lokalen Netz an eine dem lokalen Netz eigene Instanz des Dienstes, wobei die Dienstinstanz dazu bestimmt ist, auf einer physischen Vorrichtung ausgeführt zu werden, die über das Weitverkehrs-Kommunikationsnetz zugänglich ist;
- der Endpunkt (40) umfassend:
- ein Konfigurationsmodul (403), das dafür angeordnet ist, den Diensttunnel mit dem Access Gateway zu konfigurieren, und
- ein Zuordnungsmodul (404), das dafür angeordnet ist, den konfigurierten Diensttunnel mit der dem lokalen Netz eigenen Instanz des Dienstes zu verbinden, um Daten vom lokalen Netz, die mittels des Tunnels empfangen werden, zu der Instanz zu übermitteln und Daten, die von der Instanz empfangen werden, mittels des Tunnels zum lokalen Netz zu übermitteln.

9. System nach Anspruch 8, ferner umfassend eine Steuerungsvorrichtung (50), die Vorrichtung umfassend:
- ein Steuerungsmodul (503), das dafür angeordnet ist, an die Instanz Parameter zur Verbindung mit einem Transportnetz bereitzustellen, das dem lokalen Netz eigen ist, um eine Verbindung zwischen der Instanz und dem Endpunkt mittels des Transportnetzes herzustellen, um Daten zu übermitteln.

10. System nach Anspruch 8, ferner umfassend eine Steuerungsvorrichtung (50), wobei die Vorrichtung ein Virtualisierungsmodul (504) umfasst, die dafür angeordnet ist, die Instanz, die dem lokalen Netz eigen ist, in virtualisierter Form in Abhängigkeit von einer Anforderung zur Ausführung des Dienstes zu erzeugen.

11. System nach Anspruch 8, wobei das Access Gateway ferner ein Modul umfasst, das dazu ausgebildet ist, Daten, die von einer unter Kontrolle befindlichen Vorrichtung des lokalen Netzes gesendet werden, in Abhängigkeit von einer Übermittlungsregel zu klassifizieren und im Tunnel zu übermitteln.

12. Programm für eine Vorrichtung, umfassend Programmcode-Anweisungen zur Steuerung der Ausführung derjenigen der Schritte des Verfahrens zur Ausführung eines Dienstes nach einem der Ansprüche 1 bis 7, die von der Vorrichtung durchgeführt werden, wenn die Anweisungen von einem Prozessor ausgeführt werden.

13. Speichermedium, das von einer Vorrichtung lesbar ist, auf der das Programm nach Anspruch 12 gespeichert ist.

## Claims

1. Method for executing a service in a local area network (3) through a wide area communication network, by way of an access gateway (30) allowing devices (31-33) of the local area network to access the wide area network, said method comprising:
- configuration (F1), by the access gateway and by a tunnels termination point (40), of a service tunnel (41) between said gateway and said termination point, said termination point being designed to connect the service tunnel configured with an instance of the service specific to the local area network in order to route data originating from the local area network and received by means of the tunnel to said instance and to route data received from said instance to the local area network by means of the tunnel, said service instance being intended to be executed on a physical device accessible through the wide area communication network, said service tunnel allowing data to be transported on the data link layer;
- allocation (F2), by the access gateway, of an address in the local area network to said instance;
- execution of said service by said instance in the guise of a device of the local area network through the wide area communication network.

2. Method for executing a service according to Claim 1, said method furthermore comprising provision (H1), by a control device (50), of parameters for connection to a transport network (42) specific to the local area network to said instance, in order to establish a connection between said instance and the termination point by way of said transport network in order to route data.

3. Method for executing a service according to Claim 1, wherein the tunnel is configured by the access gateway when the service has to be executed.

4. Method for executing a service according to Claim 1, comprising creation, by a control device (50), of said instance as a function of a request for execution of the service.

5. Method for executing a service according to Claim 1, wherein, with the service corresponding to a string of services, a routing rule is configured on the access gateway to route, along the tunnel, data emitted by a device of the local area network under control.

6. Method for executing a service according to Claim 1, wherein, to form a multi-site local area network interconnecting said local area network and another local area network, said instance implements a switch function allowing the routing of the data between the sites.

7. Method for executing a service according to Claim 6, wherein said instance furthermore implements an address allocation function.

8. System (60) for executing a service in a local area network through a wide area communication network, said system comprising:
- an access gateway (30) allowing devices (31-33) of the local area network to access the wide area network, said gateway comprising:
- a configuration module (303), designed to configure a service tunnel with a service tunnels termination point, said service tunnel allowing data to be transported on the data link layer;
- a module for allocating an address in the local area network to an instance of the service specific to the local area network, said service instance being intended to be executed on a physical device accessible through the wide area communication network;
- said termination point (40) comprising:
- a configuration module (403), designed to configure the service tunnel with the access gateway and
- an association module (404), designed to connect the service tunnel configured with the instance of the service specific to the local area network in order to route data originating from the local area network and received by means of the tunnel to said instance and to route data received from said instance to the local area network by means of the tunnel.

9. System according to Claim 8, furthermore comprising a control device (50), said device comprising:
- a command module (503), designed to provide to said instance parameters for connection to a transport network specific to the local area network, in order to establish a connection between said instance and the termination point by way of said transport network in order to route data.

10. System according to Claim 8, furthermore comprising a control device (50), said device comprising a virtualization module (504), designed to create the instance specific to the local area network in virtualized form as a function of a request for execution of the service.

11. System according to Claim 8, wherein the access gateway furthermore comprises a module configured to classify and route, along the tunnel, data emitted by a device of the local area network under control as a function of a routing rule.

12. Program for a device, comprising program code instructions intended to command the execution of those steps of the method for executing a service according to one of Claims 1 to 7 implemented by the device, when said instructions are executed by a processor.

13. Recording medium readable by a device and on which the program according to Claim 12 is recorded.
